# EUROPÄISCHE PATENTSCHRIFT

(11) **EP 0 509 345 B1**
(45) Veröffentlichungstag und Bekanntmachung des Hinweises auf die Patenterteilung: **03.09.1997**
(21) Anmeldenummer: 92105770.9
(22) Anmeldetag: 03.04.1992
(51) Int. Cl.: B01D 24/46, B01D 24/20

(54) **Verfahren zur Regenerierung von Filterbetten und mit Regeneriervorrichtungen versehene Filterbetten**
Method for the regeneration of filter beds and filter beds with regeneration devices
Procédé d'exploitation et de régénération de couche filtrante et les couches filtrantes appropriées

(30) Priorität: 15.04.1991 DE 4112237
(43) Veröffentlichungstag der Anmeldung: 21.10.1992
(73) Patentinhaber: FORSCHUNGSZENTRUM JÜLICH GMBH, 52425 Jülich (DE); AMBS & CO KG, D-79305 Emmendingen (DE)
(72) Erfinder: Overath, Horst, W-5170 Jülich (DE); Kern, Rolf, W-7830 Emmendingen (DE); Hoppe, Friedel, W-7636 Ringsheim (DE)

(56) Entgegenhaltungen:
- GB-A- 432 742
- GB-A- 868 139
- US-A- 2 182 094

## Beschreibung

Die Erfindung bezieht sich auf ein Verfahren zur Regenerierung von Filterbetten, insb. Sandfiltern, bei laufendem Filterbetrieb durch systematische Abfolge von n jeweils 1/n der Filterfläche erfassenden Teilreinigungen durch Rückspülung mittels Saugwirkung und sie umfaßt mit Einrichtungen zum Regenerieren versehene Filterbetten.

Filterbetten, insb. Sandfilter, wie sie für die Langsamfiltration zur Abtrennung von Schwebstoffen und Mikroorganismen aus entsprechenden Suspensionen benutzt werden, sind seit langem bekannt. Je nach Beaufschlagung mit abfiltrierbarer Biomasse können solche Langsamfilter über einen mehr oder minder langen Zeitraum (von z.B. 1 - 4 Monaten) kontinuierlich betrieben werden, bis zu einem maximalen Druckverlust durch übermäßige Ansammlung von Biomasse in der Oberflächenschicht.

Für die Regenerierung wird das Filter üblicherweise trockengelegt und die oberste Schicht von 2 - 5 cm abgetragen. Bei der erneuten Inbetriebnahme muß dann insbesondere bei einer anzustrebenden ausreichende Entkeimung mit Hilfe des Filters zunächst eine Anfahrphase für eine erneute Besiedelung der obersten Sandschichten mit Ciliaten und sonstigen Filtrierern abgewartet werden, ehe das Filtrat als ausreichend keimfrei betrachtet werden kann (z.B. mit ≤ 100 Keimen/ml gemäß TVO). Dies gilt insbesondere bei der Nachbehandlung von denitrifiziertem Wasser.

Für kontinuierlich arbeitende Anlagen werden daher üblicherweise zwei Filterbetten im Wechselbetrieb beaufschlagt. Zwar wurde bereits 1975 (siehe F. Geering "Gas-Wasser-Abwasser" 55 (1975) 531-532) eine Rückspülvorrichtung für kohlebeschichtete Sandfilterbetten beschrieben, mit der sich die Außerbetriebnahme des Filters erübrigen soll und insbesondere das Filter nicht trockengelegt werden muß. Danach wird ein Spülaggregat aus einem rechteckigen Mantel mit Spüldüsen von oben in die Filtermasse eingepreßt und die Filtermasse bis in eine Tiefe von ca. 20 cm mit relativ hohem Spülwasserdruck intensiv von unten nach oben durchspült und das Schwemmwasser aus der Überlaufrinne abgepumpt. Dieses Spülaggregat ist auf Schienen gelagert und kann über Vorschubmittel um eine gewisse Teilung verschoben werden, um so nach und nach die gesamte Filterfläche zu reinigen. In ähnlicher Weise arbeitet die Anordnung gemäß GB-PS 423 742 aus 1935. Es ist nicht ersichtlich, ob diese Art der Rückspülung während des laufenden Filterbetriebes vorgesehen werden kann, wogegen vornehmlich das Fehlen einer Besiedelungsphase und damit die Gefahr von Keimdurchbrüchen spricht.

Es ist daher nicht verwunderlich, daß dieses seit langem bekannte Spülaggregat keinen umfänglichen Einsatz in der Praxis gefunden hat.

Eine Vorrichtung zur Rückspülung von Filtermedium simultan zum Filterbetrieb ist nun aus der US-PS 4 624 783 bekannt: Danach wird jeweils ein spezieller Anteil der Filterschicht mittels einer bis zum perforierten Filterboden abgesenkten Saugglocke mit Entlastungsventilen einem Flüssigkeitsrückstrom ausgesetzt, der abgeschiedene Schmutzstoffe bzw. Feststoffe mitnimmt und abführt. Ggfs. können zusätzlich Düsen für Druckluft oder -flüssigkeit vorgesehen sein, welche die Rückspülwirkung unterstützen. Dabei wird das Granulatbett (in dem von der Glocke umgrenzten Bereich) expandiert oder fluidisiert und der aufgesammelte Feststoff aufgeschlämmt und mitgenommen.

Auch die aus der US-PS 2 182 094 und der GB-PS 868 139 bekannten Reinigungskonzepte arbeiten mit einer die Gesamthöhe des Filterbetts erfassenden Saugwirkung mittels entsprechender Kompartimentierung zur Abgrenzung des der Reinigung unterworfenen Filter-Teilbereichs.

Es wurde nun gefunden, daß eine Rückspülung der Filterschicht über ihre Gesamthöhe insb. bei einer biologischen Reinigungswirkung des Filters nachteilig sein kann, da so im unteren Filterbereich angesiedelte nützliche Organismen wie Ciliaten etc. zu stark beseitigt werden, so daß Erholungszeiten erforderlich werden, deren Nicht-Einhaltung sich als Filterdurchbruch zu erkennen geben würde und daß die Reinigung der besonders verstopften oberen Filterpartien nach dem bekannten Prinzip nicht intensiv genug ist.

Ziel der Erfindung ist daher ein Reinigungsverfahren und eine dafür geeignete Vorrichtung, die eine Reinigung simultan mit dem Filterbetrieb zulassen, wobei unnötige oder schädliche Reinigungsoperationen im unteren Bereich der Filterschicht unterbleiben und die zum Verstopfen neigende Oberflächenschicht des Filters besonders intensiv gereinigt wird.

Das zu diesem Zweck entwickelte erfindungsgemäße Verfahren ist dadurch gekennzeichnet,
daß lediglich die zum Zusetzen neigenden Oberflächenschicht der Schichtdicke H mit Hilfe von bis H in das Filterbett vordringenden Saugstutzen rückgespült wird, deren Querschnitt oberhalb des Bettes zur Verlangsamung der Saugströmung derart erweitert ist, daß eine Separation von Schwebstoffen durch Mitnahme mit dem fortgeführten Spülwasserstrom von wieder sedimentierendem Filterkorn ermöglicht wird.

Eine dafür geeignete Vorrichtung umfaßt zumindest einen Saugstutzen mit einer Folge von einen schmalen Teilbereich der Filterfläche überstreichenden Ansaugrohren oder einem solchen Ansaugschlitzrohr, der mit Ansaugmitteln versehen ist und oben bis über den Wasserspiegel hinausragt und nach unten zu bis zum Boden der zum Zusetzen neigenden Oberflächenschicht des Filterbetts reicht, dessen Ansaugrohre bzw. Ansaugschlitzrohr über die Länge H einen im wesentlichen gleichbleibenden Querschnitt aufweisen, an den sich nach oben eine Querschnittserweiterung zur ausreichenden Verlangsamung der Ansaugströmung unter die Mitnahmegrenze des Filterkorns bzw. des Sandes anschließt und durch einen die Filterfläche umspannenden Tragrahmen für den Saugstutzen mit einer Bewegungsführung und Bewegungsmitteln (Antriebsmitteln) für ein systematische Abrasterung der Filterfläche und Hubmitteln für eine Bewegung des Saugstutzens in vertikaler Richtung zumindest über die Strecke H.

Als Mittel für die Bewegung des Saugstutzens innerhalb der Fläche können Kettentriebe, Pneumatikzylinder, Spindelantriebe oder Zahnstangen mit Ritzel vorgesehen sein. Bei einer erprobten Anordnung hat sich ein Kettenbetrieb als nützlich erwiesen.

Für den Hubvorgang eignen sich insbesondere Pneumatikzylinder. Statt dessen können jedoch auch Spindelantriebe, Zahnstangen mit Ritzel oder Hubmagnete vorgesehen werden. Die systematische Abrasterung kann in stetiger Aufeinanderfolge aneinandergrenzender Flächenstücke oder auch jeweils gewisse Anteile überspringend nach gewähltem Programm oder auch per Zufallsgenerator vorgesehen werden.

Besonders zweckmäßig ist eine systematische Abrasterung einer rechteckigen Fläche mit einem Saugstutzen mit Ansaugschlitzrohr, dessen Längsausdehnung im wesentlichen einer der Kantenlängen entspricht. Selbstverständlich sind jedoch auch andere geometrische Bedingungen der Abrasterung vorstellbar.

Je nach Forderung der ununterbrochenen Reinigungs- bzw. Entkeimungsleistung können die dem Reinigungsvorgang unterliegenden Teilbereiche der Gesamtfläche bis zu 5 - 10 % der Gesamtfläche ausmachen, üblicherweise werden Flächenanteile von 0,1 - 1 % für Filterbetten zur Trinkwasserreinigung gewählt. Der Saugstutzen kann mit einer Folge von Düsenrohren versehen sein, zweckmäßig ist jedoch ein die gesamte zu reinigende Teilfläche überde_ckendes Schlitzrohr. Dessen Einfahrtiefe richtet sich nach der zum Zusetzen neigenden Oberflächenschicht und wird üblicherweise etwa 5 cm betragen.

Das von einer Saugpumpe abgesaugte schwebstoffhaltige Spülwasser des Reinigungsvorganges wird je nach Belastung üblicherweise in den Abwasserkanal abgegeben.

Nachfolgend wird die Erfindung anhand der beigefügten Zeichnungen mehr im einzelnen beschrieben. Es zeigen schematisch:
- Figur 1: im wesentlichen das Prinzip der Ansaug-Teilreinigung;
- Figur 2 - 4: die Ausgestaltung des Saugstutzens und
- Figur 5 - 7: Lagerung und Antriebsmechanik im Schema.

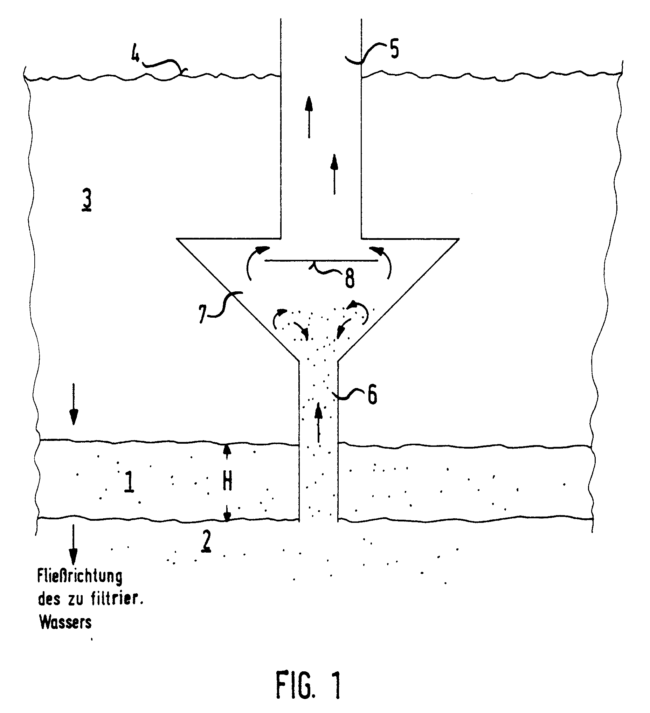

Gemäß Figur 1 ist die bioaktive Oberflächenschicht 1 eines Sandfilters 2 für die Langsamfiltration von Wasser 3 mit darüber befindlichem Pegel 4 vorgesehen. Ein Saugstutzen 5 mit Schlitzrohr 6 dringt praktisch bis zum Boden der bioaktiven Schicht 1 ein und ist oberhalb der Länge H zu einem Entspannungsraum 7 erweitert, an dessen oberem Ende vorzugsweise ein Prallblech 8 vorgesehen ist. Die Querschnittserweiterung des Saugstutzens führt zu einer solchen Verlangsamung der Strömung, daß das durch zutretendes Saugwasser aufgewirbelte schwerere Sandkorn zur Umkehr gezwungen wird, während die davon abgetrennten Schwebstoffe in der Flüssigkeit suspendiert verbleiben und zur Pumpe hin mitgenommen werden.

Die Saugwirkung der Pumpe setzt ein, wenn die untere Öffnung des Schlitzrohres 6 den Boden der Schicht 1 (Tiefe H ab Bettoberfläche) erreicht hat und erfolgt so lange, bis das abgehende Wasser ausreichend frei von Schwebstoffen ist. Diese Zeitdauer für die Saug-Aufwirbelung richtet sich nach dem vorhandenen Kornmaterial und insb. nach der anhaffenden Biomasse. Sie liegt üblicherweise beim Sandfilter bei einigen Minuten.

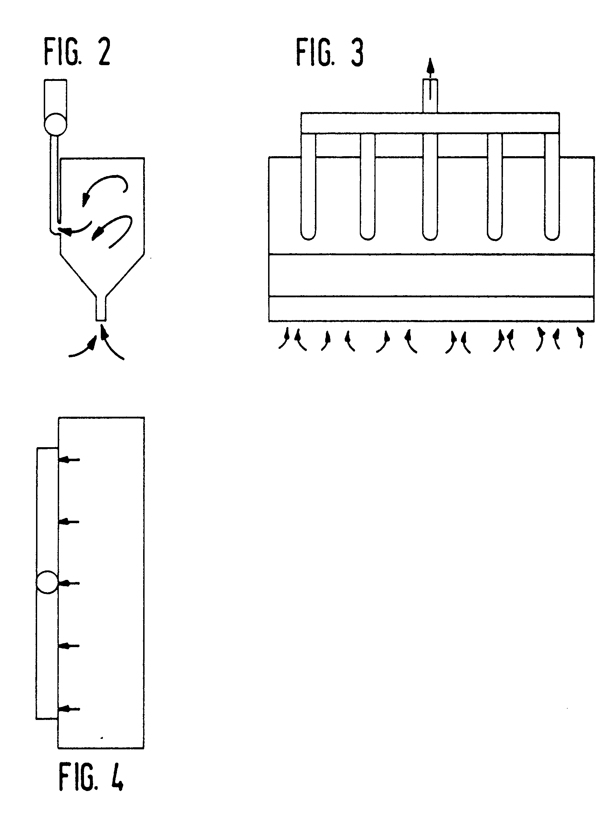

In den Figuren 2 - 4 ist ein realisiertes Ausführungsbeispiel für einen solchen Saugstutzen in unterschiedlichen Blickrichtungen gezeigt.

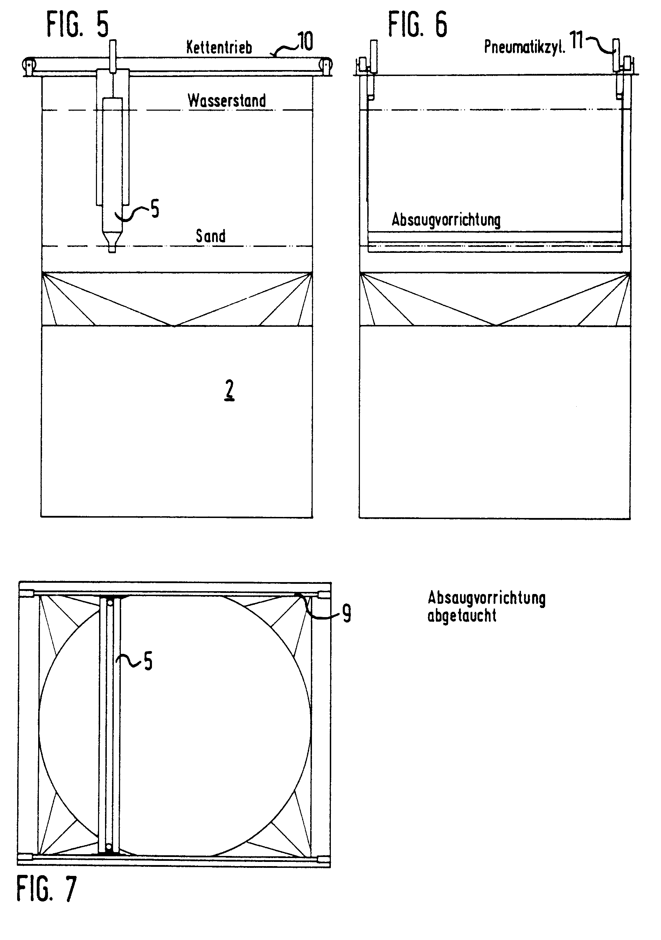

Figur 5 - 7 zeigen ein im oberen Bereich quadratisches Sandfilter, auf dessen Kasten ein Rahmen 9 vorgesehen ist für die Lagerung und Parallelführung des Saugstutzens 5 sowie ein Kettentrieb 10 für den schrittweisen Vorschub desselben und ein Pneumatikzylinder 11, der die Vertikalbewegung ermöglicht.

## Patentansprüche

1. Verfahren zur Regenerierung von Filterbetten, insbesondere Sandfiltern, bei laufendem Filterbetrieb durch systematische Abfolge von n jeweils l/n der Filterfläche erfassenden Teilreinigungen durch Rückspülung mittels Saugwirkung,
**dadurch gekennzeichnet,**
daß lediglich die zum Zusetzen neigenden Oberflächenschicht der Schichtdicke H mit Hilfe von bis H in das Filterbett vordringenden Saugstutzen rückgespült wird, deren Querschnitt oberhalb des Bettes zur Verlangsamung der Saugströmung derart erweitert ist, daß eine Separation von Schwebstoffen durch Mitnahme mit dem fortgeführten Spülwasserstrom von wieder sedimentierendem Filterkorn ermöglicht wird.

2. Verfahren nach Anspruch 1,
**dadurch gekennzeichnet,**
daß n > 10 gewählt wird.

3. Filterbett, insb. Sandfilter, mit Einrichtungen zum Regenerieren zur Durchführung des Verfahrens nach Anspruch 1, umfassend einen mit Saugmitteln versehenen Saugstutzen (5), der einen schmalen Teilbereich der Filterfläche überdeckt und oben bis über den Wasserspiegel (4) hinausragt sowie einen die gesamte Filterfläche umspannenden Tragrahmen für den Saugstutzen mit einer Bewegungsführung und Antriebsmitteln für eine systematische Abrasterung der Filterfläche und Hubmitteln für eine Bewegung des Saugstutzens in vertikaler Richtung,
**dadurch gekennzeichnet,**
daß der Saugstutzen unten in einer Folge von Ansaugrohren oder einem Ansaugschlitzrohr (6) endet, die bzw. das über die Länge H, übereinstimmend mit der Schichtdicke der zum zusetzen neigenden Oberflächenschicht, einen im wesentlichen gleichbleibenden Querschnitt aufweisen, an den sich nach oben eine Querschnittserweiterung (7) zur ausreichenden Verlangsamung der Ansaugströmung unter die Mitnahmegrenze des Filterkorns bzw. des Sandes anschließt und daß die Hubmittel für eine vertikale Lageänderung der unteren Ansaugrohr- bzw. -schlitzrohrenden zwischen einer unteren Position am unteren Ende von H und einer zumindest um die Strecke H davon entfernten oberen Position eingerichtet sind.

4. Filterbett nach Anspruch 3,
**dadurch gekennzeichnet,**
daß als Bewegungsmittel für die Flächenabrasterung ein Kettentrieb (10), zwei Pneumatikzylinder (11), ein Spindeltrieb mit einer oder mehreren Spindeln oder Zahnstangen mit Ritzel vorgesehen sind.

5. Filterbett nach Anspruch 3 oder 4,
**gekennzeichnet durch**
Pneumatikzylinder, Spindelantriebe, Zahnstangen mit Ritzel oder Hubmagnete als Hubmittel für die Vertikalbewegung des Saugstutzens.

## Claims

1. Process for the regeneration of filter beds, in particular sand filters, during continuous filtering operation by systematic succession of partial cleansing n respectively l/n of the filter surface by way of back-purging through sucking action, **characterised in that** only the surface layer of layer thickness H which is liable to increase is purged back with the aid of suction sockets which intrude up to H into the filter bed and the cross-section of which is expanded above the bed for the purpose of slowing down the suction flow in such a manner that a separation of floating materials from again sedimented filter grain is made possible by being taken along together with removed flow of rinsing water.

2. Process according to Claim 1, **characterised in that** n > 10 is chosen.

3. Filter bed, in particular sand filter, comprising devices for regeneration for carrying out the process according to Claim 1, comprising a suction socket (5) provided with suction means which covers a small partial area of the filter surface and which protrudes at the top beyond the water level (4) as well as a support frame for the suction socket, which encompasses the entire filter surface, with a movement guide and drives for systematic screening of the filter surface and lifting means for a movement of the suction socket in the vertical direction, **characterised in that** the suction socket terminates at the bottom in a succession of suction pipes or a slotted suction pipe (5) which has/have over length H, corresponding with the layer thickness of the surface layer which is liable to increase, an essentially unchanging cross-section, adjacent to which is an upwardly oriented cross-sectional expansion (7) to sufficiently slow down the suction flow to below the pickup threshold of the filter corn or the sand, and the lifting means are designed for a vertical change in position of the lower suction pipe or suction slot pipe ends between a lower position at the lower end of H and an upper position distanced therefrom by at least a path H.

4. Filter bed according to Claim 3, **characterised in that** a chain drive (10), two pneumatic cylinders (11), a spindle drive with one of more spindles or racks and pinions are provided as movement means for surface screaning.

5. Filter bed according to Claim 3 or 4, **characterised by** pneumatic cylinders, spindle drives, racks and pinions or lifting magnets as lifting means for vertical movement of the suction socket.

## Revendications

1. Procédé de régénération de couches filtrantes, en particulier de filtres à sable, avec un fonctionnement continu des filtres grâce à la succession systématique de n ou 1/n nettoyages partiels comprenant la surface filtrante, par rétrolavage au moyen d'un effet d'aspiration, caractérisé en ce que seulement la couche superficielle de l'épaisseur de couche H ayant tendance à l'encrassement est lavée en retour à l'aide de tubulures d'aspiration pénétrant jusqu'à H dans la couche filtrante, dont la section transversale est élargie au-dessus de la couche, pour ralentir l'écoulement du flux aspiré, de telle façon qu'une séparation des matières en suspension d'avec les grains filtrés qui se redéposent est rendue possible par entraînement avec le flux d'eau de lavage continu.

2. Procédé selon la revendication 1, caractérisé en ce qu'on choisit n > 10.

3. Couche filtrante, en particulier filtre à sable, avec des dispositifs de régénération pour la mise en oeuvre du procédé selon la revendication 1, comprenant une tubulure d'aspiration (5) équipée d'un moyen aspirant, qui recouvre une partie partielle étroite de la surface du filtre et s'étend vers le haut au-delà du niveau d'eau (4), ainsi qu'un cadre porteur enserrant l'ensemble de la surface du filtre pour la tubulure d'aspiration, avec une commande de déplacement et des moyens d'actionnement pour un balayage systématique de la surface du filtre, et des moyens élévateurs pour un déplacement de la tubulure d'aspiration dans la direction verticale,
caractérisé en ce que la tubulure d'aspiration débouche en bas dans une série de tubes d'aspiration ou dans un tube d'aspiration à fente (6), qui possède(nt) une section transversale pratiquement constante sur toute la longueur H correspondant à l'épaisseur de la couche superficielle ayant tendance à l'encrassement, ledit tube à fente (6) (6) étant prolongé vers le haut par un élargissement (7) de la section transversale pour ralentir suffisamment l'écoulement du flux aspiré au-dessous de la limite d'entraînement des grains filtrés ou du sable, et en ce que les moyens élévateurs sont agencés pour un changement de position verticale des extrémités inférieures du tube d'aspiration ou du tube à fente, entre une position basse à l'extrémité inférieure de H et une position haute éloignée de celle-ci d'au moins la distance H.

4. Couche filtrante selon la revendication 3, caractérisée en ce qu'il est prévu, comme moyen de déplacement pour le balayage de la surface, un dispositif de commande à chaîne (10), deux cylindres pneumatiques (11), un dispositif de commande à broche(s) avec une ou plusieurs broches ou des crémaillères avec un pignon.

5. Couche filtrante selon la revendication 3 ou 4, caractérisé par des cylindres pneumatiques, des commandes à broches, des crémaillères avec pignon ou des aimants de levage pour le déplacement vertical de la tubulure d'aspiration.
